# EUROPEAN PATENT SPECIFICATION

(11) **EP 3 816 552 B1**
(45) Date of publication and mention of the grant of the patent: **12.02.2025**
(21) Application number: 20199410.0
(22) Date of filing: 30.09.2020
(51) Int. Cl.: F25D 29/00, G06K 17/00

(54) **REFRIGERATOR WITH RFID FUNCTION**
KÜHLSCHRANK MIT RFID-FUNKTION
RÉFRIGÉRATEUR DOTÉ D'UNE FONCTION RFID

(30) Priority: 31.10.2019 TR 201916789
(43) Date of publication of application: 05.05.2021
(73) Proprietor: Arçelik Anonim Sirketi, 34445 Istanbul (TR)
(72) Inventor: ROBINSON, Adam, 34445 ISTANBUL (TR); ANDERSON, Graham, 34445 ISTANBUL (TR)

(56) References cited:
- EP-A1- 3 503 679
- WO-A1-2006/000016
- WO-A1-2018/075470
- WO-A2-03/061060
- WO-A2-2012/075449
- CN-A- 109 376 812
- US-A1- 2004 100 380
- US-A1- 2005 247 782
- US-A1- 2008 224 875
- US-A1- 2008 284 604
- US-A1- 2015 102 977

## Description

The present invention relates to a refrigerator with radio frequency identification (RFID) function.

RFID technology is used in home appliances with various implementations for different purposes. Depending on the use case, RFID systems operating at low frequency (LF), high frequency (HF) or ultra-high frequency (UHF) are employed.

HF RFID systems operate at around 13.56 MHz via inductive coupling of antenna and tag coils rather than via transmitting signals as in typical UHF systems. HF RFID may be used, as an alternative to UHF RFID, for low cost integration into domestic appliances, such as, refrigerators for food tracking via RFID tags. However, HF RFID technology has a limited read range on the order of tens of centimetres. Another problem with HF RFID is its relatively poor orientation sensitivity. Because some component of the magnetic field generated by an HF read antenna must be perpendicular to the tag coil for it to be detected, the system is highly orientation dependant. In practice this means that tags perpendicular to the coil of the read antenna will not be read in certain locations and that the read distance is reduced for orientations other than parallel to the read coil.

As a result, multiple antennas are required to allow reading of all tag positions within even a small volume, for example within the internal volume of a domestic fridge. Read antennas placed at different orientations are required to cover orientation dependence and several antennas are needed to provide the adequate read range. This increases integration cost, especially with cabling required for each antenna and a control board multiplexing all antennas. In addition, in solutions where read antennas are provided on the shelves of a refrigerator, this also means the shelves must be electrically connected and will not be moveable.

In the state of the art, European Patent Application EP1679636 A1 discloses a refrigerator comprising a plurality of antennas with different read ranges for reading RFID tags in the storage chamber.

Chinese Patent Application CN105571268 A discloses a refrigerator for reading data based on RFID technology. The refrigerator comprises a plurality of antenna coils arranged on different surfaces of the refrigerator body for widening the RFID read range. US 2008/284604 A1 discloses a refrigerator according to the preamble of claim 1.

WO 03/061060 A2 discloses how to extend the read range of RFID antennas by using a powered antenna in the front of a shelf and one passive antenna in the back of the shelf.

US 2015/102977 A1, WO 2018/075470 A1 and US 2008/224875 A1 disclose further prior art relating to the use of RFID technology.

The aim of the present invention is the realization of an RFID-enabled refrigerator wherein read capability of read antennas is increased such that RFID tags in the refrigerator can be read at a wider range of locations and orientations. A related purpose is providing this improvement with minimal additional equipment and cost. Another purpose of the present invention is providing a refrigerator with RFID function wherein flexibility for antenna location and mobility are increased.

The refrigerator realized in order to attain the aim of the present invention, explicated in Claim 1 and the respective claims thereof, comprises a body having at least one read antenna for reading an RFID tag within its read range. The body further comprises at least one passive antenna for increasing reading capability of the read antenna.

The basics of technology hardware required to implement an RFID-enable refrigerator is detailed in the state of the art. In addition to the read antennas and RFID tags, an RFID system typically further comprises an RF reader, a processing unit and a display.

Read antennas are powered (active) antennas emitting a magnetic field, which, when incident on an RFID tag causes electrical interaction with a coil in the tag. As a result, data from the tag in question can be read. The read range of the read antenna, therefore, is closely related to the range of magnetic field emitted by the read antenna.

A passive antenna, on the other hand, is an unpowered antenna. When placed close to a powered read antenna, the passive antenna may extend the magnetic field of the read antenna by inductive coupling, hence extending the effective magnetic field and thus the read range around the read antenna.

According to the invention, the at least one passive antenna is arranged such that the passive antenna extends and/or redirects the magnetic field of the at least one read antenna. Accordingly, the passive antenna may help both increase the read range and change the orientation of the magnetic field of the read antenna with which it is inductively coupled. Since the passive antennas do not require electrical connection, they can be flexibly located in a refrigerator with little integration costs. Thus, use of passive 'repeater' antennas in this way allows extended coverage in the RFID-enabled appliance.

The refrigerator body preferably comprises side walls and one or more shelves for supporting items to be refrigerated. At least some of the shelves are preferably in a form extending horizontally within the body. At least some of the shelves are releasable.

According to the invention, the at least one read antenna is integrated into at least one wall of the body. Said at least one read antenna may be vertically oriented. For example, the read antenna may be integrated into one or more side walls of the refrigerator.

One or more passive antennas are disposed on one or more shelves of the refrigerator. The passive antenna may be integrated into a shelf.

In an embodiment, one or more passive antennas may be horizontally oriented. In embodiments where a read antenna is vertically oriented, thus, a passive antenna may be perpendicular to read antennas. This configuration is especially advantageous for reading RFID tags positioned perpendicular to read antennas. However, it is also envisaged that one or more passive antennas can be placed in the refrigerator body in other orientations, such as oblique or parallel to read antennas.

Read antennas and passive antennas may be in a substantially rectangular form. Passive antennas are preferably aligned with at least one edge of a read antenna. In other words, closest edges of a pair of inductively coupled read antenna and passive antenna are substantially aligned with respect to one another.

In at least some embodiments, the read antennas, and preferably the whole RFID system of the refrigerator, operates at high frequency, which is preferably at or around 13.56 MHz.

The refrigerator realized in order to attain the aim of the present invention is illustrated in the attached figures, where:
Figure 1 is a schematic diagram illustrating how reading capability of a read antenna may be increased by a passive antenna,
Figure 2 is another schematic diagram illustrating how reading capability of a read antenna may be increased by a passive antenna,
Figure 3 is another schematic diagram illustrating how reading capability of a read antenna may be increased by a passive antenna,
Figure 4 is a front view of a refrigerator according to an embodiment of the invention.

The elements illustrated in the figures are numbered as follows:
1. Refrigerator
2. Body
3. Read antenna
4. Passive antenna

### A. RFID tag

The refrigerator (1) comprising a body (2) having at least one read antenna (3) for reading an RFID tag (A) within its read range.

The read antenna (3) consists of a conducting coil. It may be tuned via capacitors and resistors to resonate at the operating frequency, typically around 13.56 MHz for HF RFID. This antenna coil may be powered and read by an electronic control board. The tag coil consists of a conducting coil tuned to resonate at 13.56 MHz and connected to an electronic control chip. If the tag (A) is placed in the magnetic field of the read coil and oriented such that some component of the field is perpendicular to it, a current will be generated within the tag coil. This powers a tag control chip which modulates the load the tag places on the read coil. The variation of this load is used to read data from the tag via the read control board. The two coils are inductively coupled in much the same way as the two coils of a transformer.

According to the invention, the body (2) further comprises at least one passive antenna (4) for increasing reading capability of the read antenna (3).

The passive antenna (4) comprises a metallic coil tuned to resonate at the operating frequency of the system. The passive antenna (4) is not powered and may not be connected to any external control system. The passive antenna (4) can differ in dimensions from the read antenna (3) and/or the tag (A). If the passive antenna (4) is placed in the magnetic field of the read antenna (3) coil and oriented such that some component of the magnetic field is perpendicular to the passive antenna (4), a current will be generated within the coil thereof. This current will generate a second magnetic field which can extend further and in a different direction from the original magnetic field. If an RFID tag (A) is placed within this second magnetic field, it will be powered and modulate the load seen by the passive antenna (4), which will in turn modulate the load seen by the powered read antenna (3) it is coupled with, allowing the data on the tag (A) to be read by the read antenna (3). In this manner, the range and/or direction of the read antenna (3) is changed by the unpowered, passive antenna (4).

The read coverage for tags in an RFID-enabled refrigerator (1) comprising at least one read antenna (3) and at least one passive antenna (4) in accordance with the foregoing description is thus improved.

One or more passive antennas (4) may be arranged in the refrigerator (1) in various configurations such that the passive antennas (4) extend the magnetic field of one or more read antennas (3).

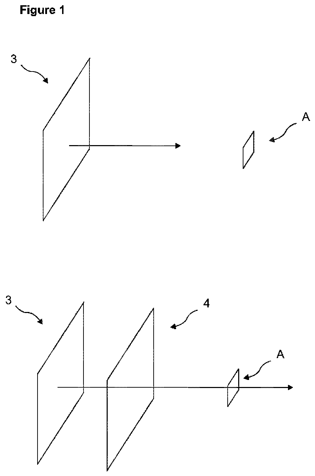

An RFID tag (A) may be positioned parallel to a read antenna (3), out of the magnetic field of the read antenna (3). In this case the read antenna is unable to read the tag (A), as illustrated in top in Figure 1. If a passive antenna (4) is placed within the range of the powered antenna (3), as shown in bottom in Figure 1, the passive antenna (4) will inductively couple to the read antenna (3) and begin to resonate, generating its own magnetic field. This second magnetic field can now couple with the coil of the tag (A) that was previously out of range and power it. This induces a load modulation in the tag (A) which affects the load seen by the passive antenna (4), which in turn affects the load seen by the read antenna (3), allowing reading of the tag data. In this way, an unpowered, passive antenna (4) can be used to increase the read range of a powered antenna (3).

One or more passive antennas (4) may further be arranged in the refrigerator (1) such that they redirect the magnetic field of one or more read antennas (3).

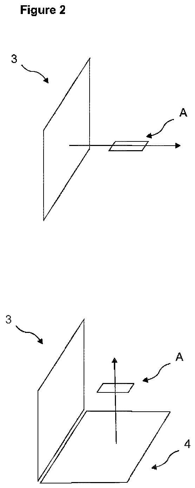

An RFID tag (A) may be positioned perpendicular to a read antenna (3), close to the read antenna's (3) central axis. In this case, even if the tag (A) is within the magnetic field of the read antenna (3), the tag (A) is unable to be detected by the read coil of the read antenna (3) because no component of the read coil's magnetic field is perpendicular to the tag coil. This is illustrated in top in Figure 2. If a passive antenna (4) is placed perpendicular to the read antenna (3), such that it sits in a plane close the read antenna's edge as shown in bottom in Figure 2, it will have sufficient inductive coupling with the perpendicular component of the read coil's magnetic field to begin to resonate. The passive antenna (4) will then generate its own magnetic field perpendicular to the read coil's field. This second magnetic field can couple with the tag (A) coil that previously could not be detected, powering and enabling it to be read. In this way, an unpowered, passive antenna (4) can be used to translate the orientation of the magnetic field of a powered antenna (3).

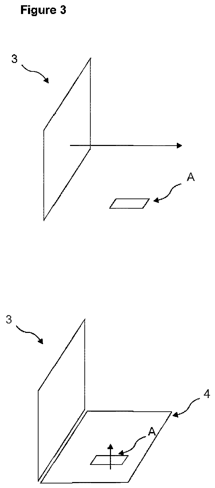

An RFID tag (A) may be positioned both perpendicular to and out of range of the read antenna (3), as shown in top in Figure 3. In this position, the read antenna (3) is unable to detect the read coil, hence the tag (A), unless its magnetic field is extended. If a passive antenna (4) is placed as illustrated in bottom in Figure 3 to inductively couple to the read antenna (3) and to the RFID tag (A), the tag (A) may be read by the read antenna (3). Here the passive antenna (4) both redirects the magnetic field and extends the read range on the horizontal direction, allowing the tag (A) to be read by the read antenna (3). In this way, an unpowered, passive antenna (4) can be used to translate the orientation of the magnetic field of a powered antenna (3) and increase its read range.

According to the invention, one or more read antennas (3) are integrated into at least one wall of the refrigerator body (2). For purposes of extending the magnetic field of at least one read antenna (3) and translating the orientation of the magnetic field, one or more passive antennas (4) may be substantially horizontally oriented. According to the invention, the passive antennas (4) are disposed on and/or integrated into at least one shelf of the refrigerator (1)

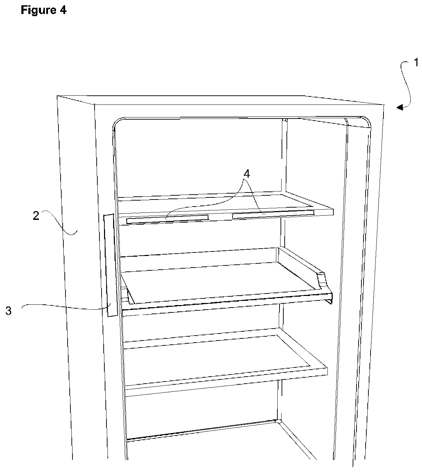

According to an embodiment of the present invention, read antennas (3) and passive antennas (4) are integrated into a refrigerator (1) as illustrated in Figure 4. In this embodiment, powered antenna coils of the read antennas (3) are integrated into side walls such that their upper and lower edges align with shelf positions. Wiring may be embedded in the walls away from a door opening on the body of the refrigerator (1). Passive antennas (4) may be attached to the shelves. In the illustrated example, two passive antennas (4) per shelf are provided, each covering half of the refrigerator width.

The refrigerator (1) of the present invention provides a much simpler integration process than if only powered antennas (3) were used to provide full coverage. Powered read antennas (3) can be vertically integrated into the walls of the main body (2) of the refrigerator (1), allowing easy integration with concealed cabling hidden from the user. One or more passive antennas (4) may be added horizontally. Passive antennas (4) can be attached to a desired location in the body (2) of the refrigerator (1) and according to this invention to a releasable shelve which is a movable part of the refrigerator.

The read antennas (3) cannot properly read RFID tags (A) when the tags (A) are oriented perpendicular to the read antennas (3) and/or when the tags (A) are out of original read range of the read antennas (3). When a read antenna (3) is coupled inductively with one or more passive antennas (4), however, it can read tags (A) within the volume of the refrigerator (1) virtually regardless of the orientation and position of the tags (A).

## Claims

1. A refrigerator (1) comprising a body (2) having at least one powered read antenna (3) for reading an RFID tag (A) within its read range, at least one shelf for supporting items to be refrigerated **characterised in that** the at least one shelf is releasable and the body (2)**,** further comprising at least one unpowered passive antenna (4) for increasing reading capability of the read antenna (3) wherein the at least one read antenna (3) is integrated into at least one wall of the body (2) and wherein the at least one passive antenna (4) is disposed on the at least one shelf.

2. The refrigerator (1) according to claim 1, wherein the at least one passive antenna (4) is arranged such that it extends the magnetic field of the at least one read antenna (3).

3. The refrigerator (1) according to claim 1 or 2, wherein the at least one passive antenna (4) is arranged such that it redirects the magnetic field of the at least one read antenna (3).

4. The refrigerator (1) according to any one of preceding claims, wherein the at least one read antenna (3) is vertically oriented.

5. The refrigerator (1) according to any one of preceding claims, wherein the at least one passive antenna (4) is horizontally oriented.

6. The refrigerator (1) according to any one of preceding claims, wherein the at least one passive antenna (4) is aligned with at least one edge of the at least one read antenna (3).

7. The refrigerator (1) according to any one of preceding claims, wherein the at least one read antenna (3) operates at high frequency (HF), preferably around 13.56 MHz.

## Patentansprüche

1. Ein Kühlschrank (1) umfasst einen Körper (2) mit mindestens einer angetriebenen Leseantenne (3) zum Lesen eines RFID-Tags (A) innerhalb seines Lesebereichs, mindestens ein Ablage zum Tragen von zu kühlenden Gegenständen, gekennzeichnet ist es dadurch, dass die mindestens eine Ablage lösbar ist und der Körper (2) ferner mindestens eine unversorgte passive Antenne (4) zur Erhöhung der Lesefähigkeit der Leseantenne (3) umfasst, wobei die mindestens eine Leseantenne (3) in mindestens eine Wand des Körpers (2) integriert ist und wobei die mindestens eine passive Antenne (4) auf dem mindestens einen Regal angeordnet ist.

2. Ein Kühlschrank (1), wie in Anspruch 1 aufgeführt, wobei die mindestens eine passive Antenne (4) so angeordnet ist, dass sie das Magnetfeld der mindestens einen Leseantenne (3) erweitert.

3. Ein Kühlschrank (1), wie in Anspruch 1 oder 2 aufgeführt, wobei die mindestens eine passive Antenne (4) so angeordnet ist, dass sie das Magnetfeld der mindestens einen Leseantenne (3) umlenkt.

4. Ein Kühlschrank (1), wie in einem der vorherigen Ansprüchen aufgeführt, wobei die mindestens eine Leseantenne (3) vertikal ausgerichtet ist.

5. Ein Kühlschrank (1), wie in einem der vorherigen Ansprüchen aufgeführt, wobei die mindestens eine passive Antenne (4) horizontal ausgerichtet ist.

6. Ein Kühlschrank (1), wie in einem der vorherigen Ansprüchen aufgeführt, wobei die mindestens eine passive Antenne (4) auf mindestens eine Kante der mindestens einen Leseantenne (3) ausgerichtet ist.

7. Ein Kühlschrank (1), wie in einem der vorherigen Ansprüchen aufgeführt, wobei die mindestens eine Leseantenne (3) mit Hochfrequenz (HF), vorzugsweise um 13,56 MHz, arbeitet.

## Revendications

1. Un réfrigérateur (1) comprenant un corps (2) doté d'au moins une antenne de lecture alimentée (3) qui permet de lire une étiquette RFID (A) située dans sa plage de lecture, d'au moins une étagère pour supporter les articles à réfrigérer, **caractérisé en ce que** ladite étagère est amovible et le corps (2) comprend en outre au moins une antenne passive non alimentée (4) pour augmenter la capacité de lecture de ladite au moins une antenne de lecture (3), dans lequel ladite au moins une antenne de lecture (3) est intégrée dans au moins une paroi du corps (2) et dans lequel ladite au moins une antenne passive (4) est disposée sur ladite au moins une étagère.

2. Le réfrigérateur (1) selon la revendication 1, dans lequel ladite au moins une antenne passive (4) est disposée de manière à étendre le champ magnétique de ladite au moins une antenne de lecture (3).

3. Le réfrigérateur (1) selon la revendication 1 ou 2, dans lequel ladite au moins une antenne passive (4) est agencée de manière à rediriger le champ magnétique de ladite au moins une antenne de lecture (3).

4. Le réfrigérateur (1) selon l'une quelconque des revendications précédentes, dans lequel ladite au moins une antenne de lecture (3) est orientée verticalement.

5. Le réfrigérateur (1) selon l'une quelconque des revendications précédentes, dans lequel ladite au moins une antenne passive (4) est orientée horizontalement.

6. Le réfrigérateur (1) selon l'une quelconque des revendications précédentes, dans lequel ladite au moins une antenne passive (4) est alignée avec au moins un bord de ladite au moins une antenne de lecture (3).

7. Le réfrigérateur (1) selon l'une quelconque des revendications précédentes, dans lequel ladite au moins une antenne de lecture (3) fonctionne à haute fréquence (HF), de préférence autour de 13,56 MHz.
